# EUROPÄISCHE PATENTSCHRIFT

(11) **EP 0 518 927 B1**
(45) Veröffentlichungstag und Bekanntmachung des Hinweises auf die Patenterteilung: **28.12.1994**
(21) Anmeldenummer: 91905392.6
(22) Anmeldetag: 09.03.1991
(51) Int. Cl.: B23B 31/02, B23B 29/034

(54) **VORRICHTUNG ZUM EINSPANNEN EINES RADIAL VERSCHIEBLICHEN ZAPFENS ODER SCHAFTES IN EINEN HALTER**
DEVICE FOR CLAMPING A RADIALLY MOBILE PIN OR SPINDLE IN A SUPPORT
DISPOSITIF DE SERRAGE D'UNE TIGE OU D'UNE BROCHE A DEPLACEMENT RADIAL DANS UN SUPPORT

(30) Priorität: 09.03.1990 DE 4007435
(43) Veröffentlichungstag der Anmeldung: 23.12.1992
(73) Patentinhaber: Krupp Widia GmbH, 45145 Essen (DE)
(72) Erfinder: FEIGENBUTZ, Werner, D-6906 Leimen 2 (DE)
(74) Vertreter: Vomberg, Friedhelm, Dipl.-Phys.
(86) Internationale Anmeldenummer: DE9100206
(87) Internationale Veröffentlichungsnummer: WO9113715

(56) Entgegenhaltungen:
- EP-A- 0 259 570
- US-A- 3 101 631

## Beschreibung

Die Erfindung betrifft eine Vorrichtung mit einem in einem Halter eingespannten und radial verschieblichen Zapfen oder Schaft, insbesondere Schaft eines Werkzeuges oder Werkzeugträgers in einem Werkzeughalter oder eines Lagerzapfens in eine Wandung, die in bezug auf die Längsachse der Vorrichtung eine schräg verlaufende Aufnahmebohrung aufweist, in der eine angepaßte Hülse axial verschiebbar sitzt, deren Außenmantelfläche gleichermaßen schräg verläuft und deren Innenmantelfläche in Form einer Aufnahmebohrung für den Schaft oder Lagerzapfen parallel zur Längsachse der Vorrichtung angeordnet ist, wobei die axiale Verstellung der Hülse eine radiale Verstellung des Schaftes oder Zapfens und somit des Werkzeuges oder Werkzeugträgers ermöglicht und von außen als Klemm- oder Schraubverbindung ausgebildete Spannelemente innerhalb des Halters vorgesehen sind, über die der Schaft oder der Zapfen oder die Hülse arretierbar sind, wobei die Länge der Hülse um ein der gewünschten axialen Verschiebung entsprechendes Maß kleiner als die Tiefe der Aufnahmebohrung ist.

Durch den exzentrischen Einbau von mit Wendeschneidplatten bestückten Bohrern in eine Werkzeugaufnahme eines Werkzeughalters können mit ein und demselben Bohrer eines bestimmten Durchmessers Bohrungen mit unterschiedlichen Durchmessern gefertigt werden.

Eine Möglichkeit besteht darin, den Werkzeug- oder Werkzeugträgerschaft in einem quer zur Längsachse des Werkzeugträgers verschiebbaren Schlitten einzuspannen, der beispielsweise über eine Verstellspindel in radialer Richtung bewegt wird. Der Nachteil dieser Ausführungsform besteht in der geringen Steifigkeit, einer zwangsläufigen Unwucht bei rotierenden Werkzeugen und dem relativ aufwendigen Aufbau, der hohe Herstellkosten Verursacht.

Durch die DE-PS 79041 ist ein Werkzeughalter bekanntgeworden, der zur Höhenverstellung des in einer exzentrischen und zur waagerechten Längsachse geneigten Durchbohrung eines im Werkzeughalter drehbaren und feststellbaren Futters angeordnet ist. Durch das Drehen des Futters wird eine geringfügige Höhenverstellbarkeit erreicht. Der Nachteil dieses Werkzeughalters besteht darin, daß die Höhenverstellbarkeit des Werkzeuges nur geringfügig ist und daß das Werkzeug bei Drehen des Futters aufgrund der Exzentrizität auf einer Kreisbahn mitgenommen wird und sich somit Anstellwinkel und Anschneidwinkel des Werkzeuges zum Werkstück ändern.

Die EP 0 109 369 A2 betrifft eine ähnliche Halterung eines Werkzeugträgers, der eine Exzenterhülse aufweist, in der das Werkzeug drehbar angeordnet ist. Zum einen ist mit einer derartigen exzentrischen Halterung ebenfalls nur eine geringe Höhenveränderung möglich, zum anderen wandert auch hier das Werkzeug bei Verstellen auf einem Kreisbogen.

Durch die DE-U1 83 05 158.9 ist eine Vorrichtung zur Halterung eines rotierend antreibbaren Drehstahles bekannt geworden, bei der auf einen Werkzeughalter eine Hülse aufgesetzt ist, die eine schräge Bohrung aufweist, in der ein Zylinder verschieblich und arretiertbar angeordnet ist. Der Zylinder weist in Richtung der Längsachse des Werkzeughalters und der Hülse eine Bohrung zur Aufnahme eines Werkzeugträgers auf, so daß die Bohrung den Zylinder schräg durchsetzt. Durch die Hülse unterhalb des Zylinders ist eine Arretierschraube angeschraubt, die in eine Gewindebohrung am Ende des Werkzeugträgers einzugreifen imstande ist. Bei Verschieben des Zylinders innerhalb der Aufnahmebohrung der Hülse und bei gelöster Arretierung des Werkzeugträgers wandert dieses auf einer Linie in Richtung der durch die Aufnahmebohrung vorgegebenen schrägen Ebene. Jedoch ist die Fixierung des Werkzeugträgers nicht ausreichend. Beim Klemmen des Zylinders mittels der Arretierschraube wird der Werkzeugträger innerhalb des Körpers verkeilt, aufgrund der Tatsache, daß das untere Ende des Werkzeugträgers gehaltert ist. Bei starker Belastung des Werkzeuges kann diese Art der Halterung zum Flattern führen; darüber hinaus wird der Werkzeugträger in der Halterung auf Biegung beansprucht.

Durch die DE 16 27 078 A1 ist eine ähnliche Schneidwerkzeuganordnung, wie die eben beschriebene bekanntgeworden, mit einer in einer schrägen Bohrung eines Werkzeughalters angeordneten Hülse, die längs der Achse des Werkzeughalters von einer Bohrung durchsetzt ist, zur Aufnahme eines Werkzeugträgers in die Hülse. In eine parallele, die schräge Bohrung des Werkzeughalters anschneidende Gewindebohrung ist eine Mitnehmerschraube geschraubt, deren Kopf zur Höhenverstellung der Hülse in eine Nut derselben eingreift. Obwohl der Werkzeugträger mittels die schräge Hülse durchgreifende Arretierschrauben arretiert ist, ist eine ausreichende Steifigkeit und Stabilität des Werkzeugträgers, insbesondere bei hohen Belastungen, nicht gegeben, weil die Verstellschraube einen Bohrkanal bedingt und in diesem Bereich die Hülse und der Werkzeugträger keine ausreichende Fixierung erfahren. Zudem wird der Werkzeugträger durch die Arretierschrauben gerade in Richtung zur schwächsten Materialstelle in Richtung des Bohrkanales der Verstellschraube gedrückt.

Der Erfindung liegt die Aufgabe zugrunde, die eingangs genannte Vorrichtung derart weiterzubilden, daß bei gedrungener Bauweise der Werkzeugträger einerseits eine radiale Verstellbarkeit besitzt, andererseits gegenüber zentrisch eingespannten, massiven Werkzeugträgern bzw. Wellen oder Walzen keine Einbußen an Steifigkeit und Stabilität aufweist, sondern auch bei extremen Belastungen eine hohe Steifigkeit, Stabilität und Standfestigkeit beibehält, ohne daß bei radialer Verstellung des Werkzeuges die Anschnittebene des Werkzeuges verändert wird.

Die Aufgabe wird bei einer gattungsgemäßen Vorrichtung dadurch gelöst, daß der Kalter im Bereich der Mündung der Aufnahmebohrung stirnseitig eine umlaufende Plananlage aufweist, die sich senkrecht zur Längsachse der Vorrichtung radial erstreckt, der Schaft oder der Lagerzapfen einen umlaufenden Absatz in Form eines ringförmigen Flansches oder Ringbundes aufweisen, der eine plane Oberfläche besitzt, mit der der Absatz auf der Plananlage des Trägers aufliegt, so daß die Hülse im Halter ohne axiale Verstellung des Schaftes oder Zapfens radial verstellbar ist.

Vorteilhaft kann der Neigungswinkel der Aufnahmebohrung des Halters und des Außenmantels der Hülse in bezug zur Längsachse der Vorrichtung bis zu 80° betragen. Gleichermaßen kann der Neigungswinkel zwischen der Aufnahmebohrung der Aufnahmehülse und der Längsachse der Vorrichtung zwischen 2 und 10° betragen.

Die erfindungsgemäße Vorrichtung besitzt den hervorstechenden Vorteil, daß ein Werkzeugträger innerhalb eines Werkzeughalters radial um eine relativ große Strecke verstellt werden kann, daß dabei jedoch die Steifigkeit, Stabilität und Standfestigkeit des Werkzeughalters und des Werkzeugträgers keine Einbußen erleiden, sondern auch unter extremen Belastungen eine hohe Steifigkeit und Stabilität beibehalten, die mit denjenigen von nicht radial verstellbaren Werkzeugträgern vergleich ist. Die Kombination der radialen Verstellbarkeit mit einer extremen Steifigkeit des Werkzeugträgers hat des weiteren den integralen Vorteil, daß bei einer derartigen Vorrichtung bei radialer Verstellung des Werkzeugträgers der Schneidwinkel des Werkzeuges nicht verändert wird.

Eine vorteilhafte Weiterbildung der Vorrichtung besteht darin, daß der Halter ein Werkzeughalter mit einer Aufnahmehülse ist, in deren Wandung wenigstens eine Gewindebohrung angeordnet ist, in deren Bereich die Hülse eine Durchbrechung in Form eines Längsschlitzes besitzt, durch die eine in die Gewindebohrung geschraubte Spannschraube hindurchzugreifen imstande ist. Die Gewindebohrung kann dabei um einen geringeren Winkel aus der Senkrechten in bezug auf die Längsachse der Vorrichtung geneigt sein und der Zapfen bzw. Schaft eine kegelförmige Vertiefung besitzen, dergestalt, daß eine in die Gewindebohrung und die Vertiefung geschraubte Spannschraube den Werkzeugträger in die Aufnahmehülse zieht und den Absatz des Werkzeugträgers in jeder radialen Stellung auf die Plananlage der Aufnahmehülse aufzupressen imstande ist. Diese Maßnahme ermöglicht es in vorteilhafter Weise, daß beim Spannen des Werkzeugträgerschaftes mittels des Spannelementes, welches mit einer kegelig ausgeführten Spannspitze versehen ist, zusätzliche eine axiale Spannkraft den Werkzeugträgerschaft an die Planfläche des Werkzeughalters drückt.

Nach gewählter relativer axialer Lage der Hülse wird jeweils die Spannschraube bzw. werden die Spannschrauben durch die Durchbrechungen der Hülse hindurchgesteckt und soweit festgezogen, bis der Werkzeugschaft an der gegenüberliegenden Hülsenmantelinnenseite ebenso wie die Hülsenmantelaußenseite an der Aufnahmebohrung kraftschlüssig anliegt. Dann pressen auch die zugeordneten Planflächen des Werkzeugträgers und des Werkzeughalters reibschlüssig aufeinander und bewirken die hohe Steifigkeit der Vorrichtung.

Des weiteren kann die Hülse endseitig in Richtung der Längsachse der Vorrichtung ein Außengewinde aufweisen, das in ein Innengewinde eine relativ zur Aufnahmebohrung axial fixierbaren Verstellmutter eingreift. Diese kann als Glocke ausgebildet sein, die mittig von einer Spannschraube durchgriffen ist, deren Gewindeschaft in eine zentrische Gewindebohrung des Lagerzapfens zu dessen Fixierung eingreift, dergestalt, daß der ringförmige Flansch des Lagerzapfens auf die Plananlage der Wandung aufzupressen imstande ist.

Zur axialen Verstellung der Hülse kann ein von außen betätigbares Verstellelement vorgesehen sein, das innerhalb des Werkzeughalters angeordnet ist; das Verstellelement kann innerhalb der Wandung der Aufnahmehülse des Werkzeughalters angeordnet sein. Das Verstellelement kann ein vorzugsweise mit einer Skalierung versehenes Spiralrad aufweisen, das einen Stift zu betätigen imstande ist, der in eine Sackbohrung innerhalb der Hülse eingreift. Ebenso kann das Spiralrad über einen Innensechskant betätigbar sein.

Nach einer weiteren Ausgestaltung der Erfindung besteht das Verstellelement aus einem Gewindering und einem Gewindestück, wobei der Gewindering den Werkzeughalter in einer Ringnut liegend umfaßt und dessen Innengewinde in ein Außengewinde des durch eine Durchbrechung der Hülse ragendes Gewindestück greift, das formschlüssig mit der Hülse verbunden ist. Vorzugsweise durchgreift das Gewindestück einen Längsaxialschlitz des Werkzeughalters.

In einer vorteilhaften Weiterbildung kann der Zapfen als Lagerzapfen mit einem Sackloch zur Aufnahme eines Schaftes oder einer Welle ausgebildet sein.

Je nach der relativen axialen Lage der Hülse in bezug auf die Aufnahmebohrung kann der durch die Hülse aufgenommene Werkzeugträgerschaft mehr oder weniger in axialer Richtung eingespannt werden. Um zu ermöglichen, daß ein und dieselbe Hülse in axialer Richtung eine Vielzahl einstellbarer Stellungen in der Aufnahmebohrung einnehmen kann, ist die Länge der Hülse - je nach der gewünschten axialen Verschiebung - um ein entsprechendes Maß kleiner als die Tiefe der Aufnahmebohrung des Werkzeughalters.

Nach einer Weiterbildung sind die Durchbrechungen der Hülse als Axialschlitz und die betreffenden Ausnehmungen des Werkzeugträgerschaftes als Sacklöcher ausgebildet, wodurch sich eine stufenlose radiale Verstellmöglichkeit ergibt.

Um die radiale Verstellbarkeit zu vereinfachen, wird nach einer Weiterbildung der Erfindung vorgeschlagen, zur axialen Verstellung der Hülse ein von außen betätigbares Verstellelement vorzusehen, das im Werkzeughalter angeordnet ist. Dieses Verstellelement dient bei gelösten Spannschrauben über entsprechende Verstellelemente zur axialen Ausrichtung der Hülse. Ist die Ausrichtung durchgeführt, wird die Verspannung der Hülse in beschriebener Weise über Spannschrauben herbeigeführt. Im einfachsten Fall besitzt das Verstellelement ein mit einer Skalierung versehenes Spiralrad, das einen Stift betätigt, der in einer Sackbohrung des Hülsenaußenmantels eingreift. Als robust hat sich ein Innensechskant erwiesen, über den das Spiralrad betätigt wird.

Um ein sehr genaues (spielfreies) Erkennen der Verstellgröße zu ermöglichen, wird eine einem Langloch ähnliche Ausnehmung am Werkzeugschaft bzw. Werkzeugträgerschaft ausgeführt, wobei eine Längsseite auf einer Abschrägung einen Nonius und die Hülse an der entsprechenden Stelle eine Skalierung erhält.

Eine vorteilhafte Ausgestaltung der Erfindung sieht vor, den Zapfen als Lagerzapfen für eine Walze auszubilden, um eine Feinjustierung, z.B. eines Walzenspaltes zwischen zwei nebeneinanderliegenden Walzen, zu ermöglichen.

Im folgenden wird die Erfindung anhand einer Ausführungsbeispiele darstellende Zeichnung erläutert. Es zeigen
- Fig. 1: eine Vorrichtung, bestehend aus einem Werkzeughalter mit einem daran gehaltenen, radial verschieblichen Werkzeugträger im Längsschnitt,
- Fig. 2a, 2b: eine entsprechende Vorrichtung wie Fig. 1 mit einem andersartigen Verstellelement
- Fig. 3: einen radial verschiebbaren Lagerzapfen zur endseitigen Aufnahme eines Schaftes, einer Welle oder eine Walze.

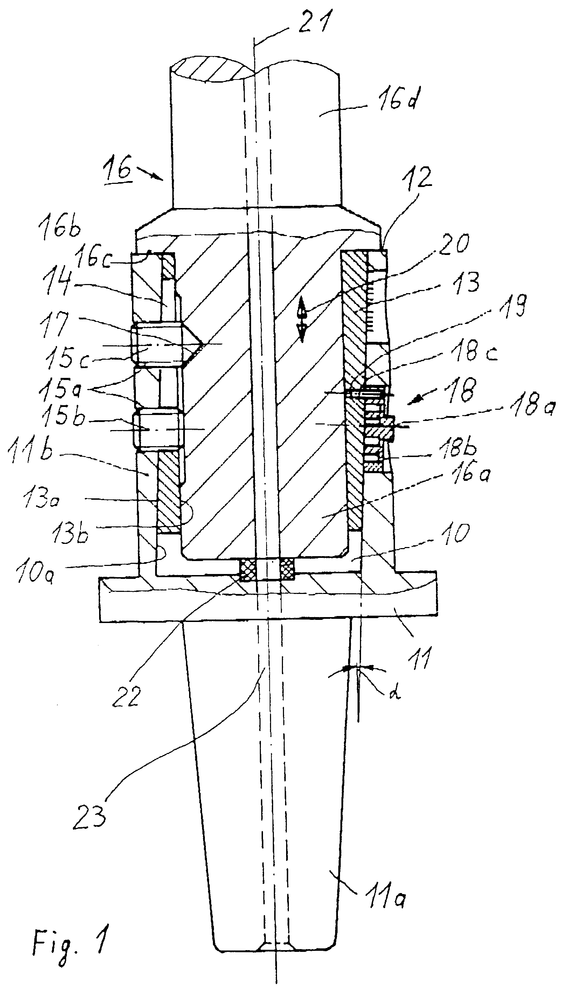

Fig. 1 zeigt einen Werkzeughalter 11, der an einem Ende einen Kegelschaft 11a und am anderen Ende eine Aufnahmehülse 11b aufweist, die eine Aufnahmebohrung 10 zur Aufnahme eines Werkzeuges oder Werkzeugträgers 16 besitzt. Der Werkzeugträger 16 weist hierzu einen Schaft 16a auf, der zur Aufnahme innerhalb der Aufnahmebohrung 10 dient.

Die Aufnahmebohrung 10 ist nicht konzentrisch in Richtung der Längsachse 21 der Vorrichtung gerichtet, sondern in bezug auf die Längsachse 21 um einen Winkel α geneigt und somit schrägzylindrisch. Der Neigungswinkel α, den die Aufnahmebohrungsinnenwand mit einer Parallelen zur Längsachse 21 bildet, beträgt im vorliegenden Falle etwa 4°, kann jedoch den Bedürfnissen entsprechend ausgeführt sein.

In die Aufnahmebohrung 10 ist eine an ihrem Außenmantel ebenso schrägzylindrisch geformte Hülse 13 eingelegt, wobei der Außenmantel 13a der Hülse 13 und der Innenmantel 10a der Aufnahmebohrung 10 gleichgerichtet sind und so umlaufend aneinanderliegen, daß im unverspannten Zustand eine axiale Bewegung der Hülse in Richtung des Doppelpfeiles 20 möglich ist. Die durch den Innenmantel 13b der Hülse 13 umschlossene Durchgangsbohrung, in der der Werkzeugträger mit seinem endständigen Schaft 16a sitzt, verläuft parallel der Längsachse 21 des Werkzeughalters 11 bzw. des Werkzeugträgers 16. Durch axiale Verschiebung der Hülse 13 gleitet diese schräg innerhalb der schrägen Aufnahmebohrung 10, so daß sich die Mittelachse der Durchgangsbohrung der Hülse 13 und somit der in der Hülse gehalterte Werkzeugträger 16 in radialer Richtung um ein entsprechendes Maß verschiebt.

Die Aufnahmehülse 11b besitzt Gewindebohrungen 15a, in die Spannschrauben 15b und 15c geschraubt sind. Die Hülse besitzt ihrerseits im Bereich dieser Gewindebohrungen 15a eine schlitzförmige Durchbrechung 14 in axialer Richtung mit einer Breite, die ein Durchführen der Spannschrauben 15b und 15c erlaubt. Die Spannschraube 15c läuft an ihrem Spannende spitzkonisch zu, wobei beispielsweise der Schaft 16a des Werkzeugträgers 16 eine korrespondierende kegelige Sackbohrung 17 aufweisen kann, die Spannseite der Spannschraube 15b ist plan bzw. gemäß dem Zylindermantel des Schaftes 16a ausgebildet.

Der Längsschlitz 14 dient gleichzeitig als Anschlagbegrenzung, um ein Herausfallen der Hülse 13 zu vermeiden. Der axiale Verstellbereich dr Hülse 13 wird gleichermaßen durch diesen Anschlag an die Spannschraube begrenzt. Hiermit ergibt sich weiterhin eine Verdrehsicherung, die ein unkontrolliertes Verstellen der Hülse 13 in radialer Richtung verhindert, so daß sich die Position des Werkzeuges bzw. der Schneide des Bohrwerkzeuges in radialer Richtung nicht ändert.

Die Aufnahmehülse 11b besitzt stirnseitig eine ringförmige, umlaufende Planfläche 12. Gleichermaßen besitzt der Werkzeugträger im Übergang vom Werkzeugschaftteil 16d zum Schaft 16a einen umlaufenden Flansch oder Ringbund mit einer planen Oberfläche 16c, wobei die Planfläche 12 und die Oberfläche 16c immer aufeinanderliegen und beim Einspannen des Schaftes 16a innerhalb der Aufnahmehülse 11b aufeinanderfressen. Vorteilhafterweise bleibt bei Verstellung der Hülse 13 die Plananlage 12, 16c erhalten, da die Hülse 13 im Halter 11 ohne axiale Verstellung des Werkzeugträgerschaftes 16a verschoben werden kann.

Die Gewindebohrung 15a für die Spannschraube 15c kann um einen geringeren Winkel aus der Senkrechten in bezug auf die Längsachse 21 der Vorrichtung nach unten geneigt sein, so daß beim Anziehen der Spannschraube 15c der Schaft 16a des Werkzeugträgers 16 nach innen in die Aufnahmebohrung 10 der Aufnahmehülse 11b des Werkzeughalters 11 gezogen wird. In jedem Fall führt ein Festschrauben der Spannschrauben 15b und 15c dazu, daß der Schaft 16a des Werkzeugträgers 16 innerhalb der Hülse 13 und der Aufnahmehülse 11b fest verspannt wird, wobei die stirnseitige Planfläche 12 derselben und die umlaufende Oberfläche 16c des Flansches 16b beim Verspannen reibschlüssig aufeinanderliegen und die extreme Steifigkeit der Vorrichtung bedingen. Mit Hilfe der im Schaft 16a angebrachten kegeligen Bohrung 17 wird somit eine pressende Anlage der planen Oberflächen des Werkzeughalters und des Werkzeugträgers 16 erreicht.

Zur einfacheren Verstellbarkeit der Hülse 13 in gelöstem Zustand ist ein Verstellelement 18 vorgesehen, das ein Spiralrad 18b aufweist, welches über einen Innensechskant 18a hetätigbar ist. Durch Drehung des Innensechskantes wird ein Stift 18c in axialer Richtung (Richtung des Doppelpfeiles 20) nach oben bzw. nach unten bewegt, wobei dieser Stift, der in einer entsprechenden Sackbohrung der Hülse einliegt, die Hülse mitnimmt. Im unteren Bereich besitzt der Werkzeugträger noch eine Ringdichtung 22 zur Abdichtung des ggf. vorgesehenen Kühl- und/oder Schmiermittelkanales 23.

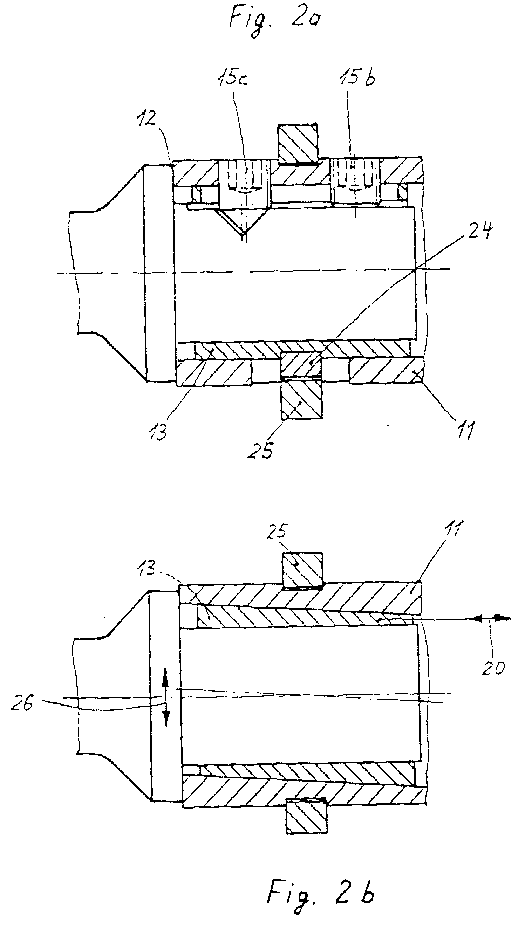

In einer entsprechend aufgebauten Vorrichtung wird bei der Ausführungsform nach Fig. 2a und b das Verstellelement auf einem Gewindering 25 und einem Gewindestück 24 gebildet. Der Gewindering 25 liegt in einer Ringnut des Werkzeugträgers 16, umfaßt diesen und greift mit seinem Innengewinde in ein entsprechendes Außengewinde des Gewindestückes 24 ein, das formschlüssig mit der Hülse 13 verbunden ist. Das Gewindestück 24 durchgreift einen Längsschlitz des Werkzeughalters 11.

Die erfindungsgemäße Vorrichtung weist eine gedrungene Bauweise bei hoher Stabilität auf und ist für den Einsatz moderner Werkzeuge geeignet. Das Werkzeug läßt Bearbeitungsvorgänge, insbesondere auch eine unmittelbare Fertigbearbeitung von Bohrungen mit großer Genauigkeit zu. Das Werkzeug kann sowohl für Bearbeitungsoperationen verwendet werden, bei denen es sich relativ zum stillstehenden Werkzeug dreht als auch bei solchen Bearbeitungsvorgängen, bei denen sich das Werkstück dreht und der Werkzeugkopf stillsteht.

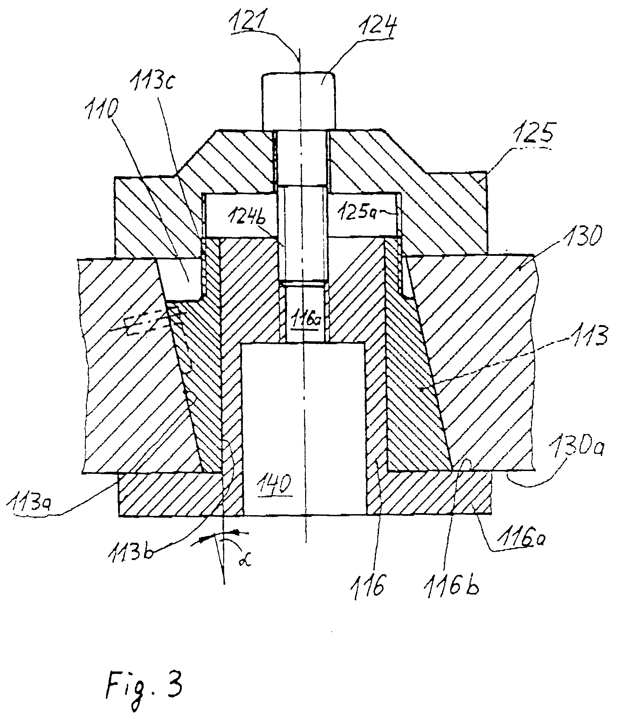

In Fig. 3 ist eine Wandung 130 als integrierter Lagerzapfen 116, der dem Schaft 16a der Fig. 1 entspricht, gezeigt, wobei der Lagerzapfen 116 zur endseitigen radialverschiehbaren Lagerung einer Welle bzw. Walze oder eines Zapfens dient und zur Aufnahme der Welle, Walze oder des Zapfens ein Sackloch 140 aufweist. Die Wandung 130 ist von einer in bezug auf die Längsachse 121 des Lagerzapfens 116 schräg verlaufenden zylindrischen Aufnahmebohrung 110 durchbrochen, in die eine Hülse 113 mit der gleichen Neigung wie die Aufnahmebohrung 110 bündig eingepaßt ist, wobei die Hülse 113 eine in bezug auf die Längsachse 121 des Lagerzapfens 116 parallele und damit nicht geneigte Durchgangsbohrung 113b aufweist. Der Grad, mit dem die durch die Wandung 130 schräg verlaufende Aufnahmebohrung 110 gegenüber der Längsachse 121 bzw. der Durchgangsbohrung in der Hülse geneigt ist, ist durch den Neigungswinkel α zwischen dem Außenmantel 113a der Hülse 113 und dem Innenmantel der Durchgangsbohrung 113b bezeichnet.

An einem Ende weist die Hülse 113 einen in bezug auf die Längsachse 121 und in Richtung ihrer Durchgangsbohrung radialsymmetrisch verlaufenden Kragen auf, der ein Außengewinde 113c trägt. Ein auf oder innerhalb der Wandung 130 angeordnetes Spannelement 125 besitzt ein dem Lagerzapfen 116 zugewandtes Sackloch, in welches ein zur Wandung 130 offenes Innengewinde 125a eingeschnitten ist, in das das Außengewinde 113c des Lagerzapfens 113 schraubbar ist. Das Spannelement 125, welches relativ zur Wandung 130 fixiert oder bewegt werden kann, ist glockenförmig ausgebildet und weist zentrisch in bezug zum Innengewinde 125a ein glattes Durchgangsloch auf, durch welches ein Spannelement in Form eines Gewindebolzens 124 steckbar ist. Der Lagerzapfen 116 weist zentrisch auf der dem Spannelement 125 zugewandten Seite eine Gewindebohrung 116c auf, die zentrisch zum sackloch 140 gerichtet und in die der Gewindeschaft des Gewindebolzens 124 schraubbar ist.

Das andere Ende des Lagerzapfens 116 besitzt einen umlaufenden, radial sich erstreckenden Flansch 116a, der eine zur Wandung 130 gerichtete plane Oberfläche 116b aufweist. Ebenso besitzt die Wandung 130 im Bereich der schrägen Aufnahmebohrung 110 eine senkrecht zur Längsachse 121 gerichtete, plane Oberfläche 130a, wobei die Planflächen 116b und 130a des Flansches 116a bzw. der Wandung 130 aufeinanderliegen.

Um eine Radialverschiebung des Lagerzapfens 116 vorzunehmen, wird die Schraube 124 gelöst und das auf der Außenseite der Wandung 130 aufliegende glockenförmige Spannelement 125 verdreht. Beim Verdrehen des Spannelementes 125 wird die in die schräg verlaufende Aufnahmebohrung 110 eingepaßte Hülse 113 gehoben bzw. gesenkt und dabei der Lagerzapfen 116 mit samt der Hülse 113 und dem Spannelement 125 senkrecht zur Längsachse 121 radial verschoben. Hierdurch ist beispielsweise eine Feinjustierung eines Walzenspaltes zwischen zwei nebeneinander angeordneten Walzen ermöglicht. Im Anschluß an diese Verstellung wird die Schraube 124 in die Gewindebohrung 116c des Lagerzapfens 116 fest eingeschraubt, wobei das glochenförmige Spannelement 125 auf die Außenseite der Wandung 130 gespannt wird und die Einstellung damit fixiert ist.

Der Gegenstand der Erfindung ist überall dort gewerblich anwendbar, wo entweder ein hoch belastetes Werkzeug der spanabhebenden Fertigung oder eine Welle, eine Walze oder ein Zapfen innerhalb einer Zapfen- oder Lagerzapfenhalterung - feststehend oder rotierende - in bezug auf die Längsachse des Werkzeuges oder der Lagerzapfen radial verstellbar ohne Veränderung der Schneidwinkel sein soll, gleichzeitig aber extrem steif, stabil und standfest ausgeführt sein muß.

### Bezugszeichenliste

- 10: Aufnahmebohrung der Aufnahmehülse 11b
- 10a: Innenmantel der Aufnahmebohrung der Aufnahmehülse 11
- 11: Werkzeughalter
- 11a: Kegelschaft des Werkzeughalters 11
- 11b: Aufnahmehülse des Werkzeughalters 11
- 12: ringförmige Plananlage der Aufnahmehülse 11b
- 122: Sackloch in Form eines Langloches
- 123: Sacklochzapfen
- 124: Spannelement
- 124b: Außengewinde
- 125: Spannelement
- 125a: Gewinde
- 13,113: Hülse
- 13a,113a: Außenmantel der Aufnahmebohrung 10, 110
- 13b,113b: Innenmantel der Durchgangsbohrung der Hülse 13, 113
- 113c: Führungsleiste
- 14: Durchbrechung
- 15a: Gewindebohrungen
- 15b,15c: Spannschrauben
- 16: Werkzeug oder Werkzeugträger
- 16a: Schaft des Werkzeuges oder Werkzeugträgers 16
- 16b: umlaufender Flansch oder Ringbund
- 16c: plane Oberfläche des umlaufenden Flansches 16b
- 16d: Werkzeugschaftteil
- 116: Lagerzapfen
- 116a: umlaufender Flansch mit planer Oberfläche
- 116b: plane Oberfläche des Flansches 116a
- 116c: Gewindebohrung
- 17: kegelförmige Ansenkung innerhalb des Schaftes 16a
- 18: Verstellelement
- 18a: Innensechskant
- 18b: Spiralrad
- 18c: Stift
- 19: Sackbohrung zur Aufnahme des Stiftes 18c
- 20: axiale Verschiebungsrichtung in Richtung des Doppelpfeiles
- 110: Aufnahmebohrung innerhalb der Wandung 130
- 110a: Innenmantel der Aufnahmebohrung 110 der Wandung 130
- 21, 121: Längsachse des Werkzeuges oder Werkzeugträgers 16 oder der Hülse 116
- 130: Wandung, die die erfindungsgemäße Lagereinheit trägt
- 130a: Planauflage der Wandung
- 140: Sackloch
- 22: Dichtung
- 23: Kühl- und/oder Schmiermittelkanal
- 24: Gewindestück
- 25: Gewindering
- 26: radiale Verstellrichtung (Doppelpfeil)

## Patentansprüche

1. Vorrichtung mit einem in einem Halter (11, 130) eingespannten und radial verschieblichen Zapfen (116) oder Schaft (16a), insbesondere Schaft (16a) eines Werkzeuges oder Werkzeugträgers (16) in einem Werkzeughalter (11) oder eines Lagerzapfens (116) in eine Wandung (130), die in bezug auf die Längsachse (21, 121) der Vorrichtung eine schräg verlaufende Aufnahmebohrung (10, 110) aufweist, in der eine angepaßte Hülse (13, 113) axial verschiebbar sitzt, deren Außenmantelfläche (13a, 113a) gleichermaßen schräg verläuft und deren Innenmantelfläche in Form einer Aufnahmebohrung (13b, 113b) für den Schaft (16a) oder Lagerzapfen (116) parallel zur Längsachse (21, 121) der Vorrichtung angeordnet ist, wobei die axiale Verstellung der Hülse (13, 113) eine radiale Verstellung des Schaftes (16a) oder Zapfens (116) und somit des Werkzeuges oder Werkzeugträgers (16) ermöglicht und von außen als Klemm- oder Schraubverbindung (15, 24, 25; 124, 125) ausgebildete Spannelemente innerhalb des Halters vorgesehen sind, über die der Schaft oder der Zapfen (16a, 116) oder die Hülse (13, 113) arretierbar sind, wobei die Länge der Hülse (13, 113) um ein der gewünschten axialen Verschiebung entsprechendes Maß kleiner als die Tiefe der Aufnahmebohrung (13b, 113b) ist,
**dadurch gekennzeichnet,**
daß der Halter (11, 130) im Bereich der Mündung der Aufnahmebohrung (10, 110) stirnseitig eine umlaufende Plananlage (12, 130a) aufweist, die sich senkrecht zur Längsachse (21, 121) der Vorrichtung radial erstreckt, der Schaft (16a) oder der Lagerzapfen (116) einen umlaufenden Absatz (16b, 116b) in Form eines ringförmigen Flansches oder Ringhundes aufweisen, der eine plane Oberfläche (16c, 116b) besitzt, mit der der Absatz (16b, 116b) auf der Plananlage (12, 130a) des Trägers (11, 130) aufliegt, so daß die Hülse (13, 113) im Halter (11, 130) ohne axiale Verstellung des Schaftes (16a) oder Zapfens (116) verstellbar ist.

2. Vorrichtung nach Anspruch 1, dadurch gekennzeichnet, daß der Neigungswinkel (α) der Aufnahmebohrung (10, 110) des Halters (11, 130) und der Außenmantel (13a, 113a) der Hülse (13, 113) in bezug zur Längsachse (21, 121) der Vorrichtung bis zu 80° beträgt.

3. Vorrichtung nach Anspruch 2, dadurch gekennzeichnet, daß der Halter ein Werkzeughalter (11) mit einer Aufnahmehülse (11b) ist, in deren Wandung wenigstens eine Gewindebohrung (15a) angeordnet ist, in deren Bereich die Hülse (13) eine Durchbrechung in Form eines Längsschlitzes (14) besitzt, durch die ein in die Gewindebohrung (15a) geschraubte Spannschraube (15b, 15c) hindurchgreift.

4. Vorrichtung nach Anspruch 3, dadurch gekennzeichnet, daß die Gewindebohrung (15a) um einen geringeren Winkel aus der Horizontalen geneigt ist und der Zapfen (16a) eine kegelförmige Vertiefung (17) besitzt, dergestalt, daß eine in die Gewindebohrung und die Vertiefung geschraubte Spannschraube den Werkzeugträger (16) in die Aufnahmehülse (11b) zieht und den Absatz (16b) des Werkzeugträgers (16) auf die Plananlage (12) der Aufnahmehülse (11b) aufzupressen imstande ist.

5. Vorrichtung nach Anspruch 1 oder 2, dadurch gekennzeichnet, daß die Hülse (113) endseitig in Richtung der Längsachse (121) der Vorrichtung ein Außengewinde (113c) aufweist, daß in ein Innengewinde (125a) einer relativ zur Aufnahmebohrung (110) axial fixierbaren Verstellmutter (125) eingreift.

6. Vorrichtung nach Anspruch 5, dadurch gekennzeichnet, daß die Verstellmutter als Glocke (125) ausgebildet ist, die mittig von einer Spannschraube (124) durchgriffen ist, deren Gewindeschaft in eine zentrische Gewindebohrung (116c) des Lagerzapfens (116) zu dessen Fixierung eingreift, dergestalt, daß der Flansch (116a) des Lagerzapfens (116) auf die Planauflage (130a) der Wandung (130) aufzupressen imstande ist.

7. Vorrichtung nach einem der Ansprüche 1 bis 6, dadurch gekennzeichnet, daß zur axialen Verstellung der Hülse (13, 113) ein von außen hetätigbares Verstellelement (18; 24, 25; 124, 125) vorgesehen ist.

8. Vorrichtung nach Anspruch 7, dadurch gekennzeichnet, daß das Verstellelement (18) innerhalb des Werkzeugträgers (11) angeordnet ist.

9. Vorrichtung nach Anspruch 7, dadurch gekennzeichnet, daß das Verstellelement (18) innerhalb der Wandung der Aufnahmehülse (11b) des Werkzeugträgers (11) angeordnet ist.

10. Vorrichtung nach einem der Ansprüche 7 bis 9, dadurch gekennzeichnet, daß das Verstellelement (18) ein vorzugsweise mit einer Skalierung versehenes Spiralrad (18b) aufweist, das einen Stift (18c) zu betätigen imstande ist, der in eine Sackbohrung (19) innerhalb der Hülse (13) eingreift.

11. Vorrichtung nach Anspruch 10, dadurch gekennzeichnet, daß das Spiralrad (18b) über einen Innensechskant (18a) betätigbar ist.

12. Vorrichtung nach Anspruch 7, dadurch gekennzeichnet, daß das Verstellelement (18) aus einem Gewindering (25) und einem Gewindestück (24) besteht, wobei der Gewindering (25) den Werkzeughalter in einer Ringnut liegend umfaßt und dessen Innengewinde in ein Außengewinde des durch eine Durchbrechung des Hülse (13) ragendes Gewindestückes (24) greift, das formschlüssig mit der Hülse (13) verbunden ist.

13. Vorrichtung nach Anspruch 12, dadurch gekennzeichnet, daß das Gewindestück einen längsaxialen Schlitz als Durchbrechung des Werkzeughalters (11) durchgreift.

14. Vorrichtung nach Anspruch 1, dadurch gekennzeichnet, daß der Zapfen als Lagerzapfen (116) mit einem Sackloch (140) zur Aufnahme eines Schaftes oder einer Welle ausgebildet ist.

15. Vorrichtung nach Anspruch 1, dadurch gekennzeichnet, daß der Neigungswinkel (α) zwischen der Aufnahmebohrung (10) der Aufnahmehülse (11b) und der Längsachse (21) der Vorrichtung zwischen 2 und 10° beträgt.

## Claims

1. Device with a radially mobile pin (116) or spindle (16a) clamped in a holder (11, 130), in particular the spindle (16a) of a tool or tool support (16) in a tool holder (11) or of a journal pin (116) into a wall (130), which has a receiving hole (10, 110) extending at an angle in relation to the longitudinal axis (21, 121) of the device, in which an adapted sleeve (13, 113) sits for axial movement, its the outer shell surface (13a, 113a) extending at the same angle and its inner shell surface being constructed in the form of a receiving hole (13b, 113b) for the spindle (16a) or journal pin (116) and arranged parallel to the longitudinal axis (21, 121) of the device, wherein the axial adjustment of the sleeve (13, 113) permits a radial adjustment of the spindle (16a) or pin (116) and thus of the tool or tool support (16), and clamping elements constructed from the outside in the form of a clamped or screw joint (15, 24, 25; 124, 125) are provided inside the holder, by means of which the spindle or pin (16a, 116) or the sleeve (13, 113) may be fixed in position, wherein the length of the sleeve (13, 113) is smaller than the depth of the receiving hole (13b, 113b) by a dimension corresponding to the desired axial movement,
characterised in that in the area where the receiving hole (10, 110) opens onto its face side, the holder (11, 130) has a circumferential plane abutment (12, 130a), which extends radially at right angles to the longitudinal axis (21, 121) of the device, the spindle (16a) or the journal pin (116) has a circumferential shoulder (16b, 116b) in the form of a ring-shaped flange or collar with a plane surface (16c, 116b), at which the shoulder (16b, 116b) lies on the plane abutment (12, 130a) of the support (11, 130) so that the sleeve (13, 113) may he adjusted in the holder (11, 130) without axially adjusting the spindle (16a) or pin (116).

2. Device according to Claim 1, characterised in that the angle of inclination (α) of the receiving hole (10, 110) of the holder (11, 130) and the outer shell (13a, 113a) of the sleeve (13, 113) in relation to the longitudinal axis (21, 121) of the device amounts to up to 80°.

3. Device according to Claim 2, characterised in that the holder is a tool holder (11) with a receiving sleeve (11b), in the wall of which at least on threaded hole (15a) is disposed, in the vicinity of which the sleeve (13) has an opening in the form of a longitudinal slot (14), through which a clamping screw (15b, 15c) screwed into the threaded hole (15a) engages.

4. Device according to Claim 3, characterised in that the threaded hole (15a) is inclined at a small angle from the horizontal and the pin (16a) has a conical depression (17) so that a clamping screw screwed into the threaded hole and the depression pulls the tool support (16) into the receiving sleeve (11b) and is in a position to press the shoulder (16b) of the tool support (16) onto the plane abutment (12) of the receiving sleeve (11b).

5. Device according to Claim 1 or 2, characterised in that the sleeve (113) has an external thread (113c) on its end in the direction of the longitudinal axis (121) of the device; that an adjusting nut (125), which may he fixed axially relative to the receiving hole (110), engages into an internal thread (125a).

6. Device according to Claim 5, characterised in that the adjusting nut is in the shape of a bell (125), which has a clamping screw (124) passing through its centre, the threaded shaft of which engages into a centric threaded hole (116c) of the journal pin (116) to fix it in position so that the flange (116a) of the journal pin (116) is in a position to press onto the plane abutment (130a) of the wall (130).

7. Device according to one of Claims 1 to 6, characterised in that an adjusting element (18; 24, 25; 124, 125), which may be operated from the outside, is provided for axial adjustment of the sleeve (13, 113).

8. Device according to Claim 7, characterised in that the adjusting element (18) is disposed inside the tool support (11).

9. Device according to Claim 7, characterised in that the adjusting element (18) is disposed inside the wall of the receiving sleeve (11b) of the tool support (11).

10. Device according to one of Claims 7 to 9, characterised in that the adjusting element (18) has a spiral wheel (18b), which is preferably provided with a scale and is able to operate a pin (18c) engaging into a blind hole (19) inside the sleeve (13).

11. Device according to Claim 10, characterised in that the spiral wheel (18b) may he operated via a hexagon socket (18a).

12. Device according to Claim 7, characterised in that the adjusting element (18) comprises a threaded ring (25) and a threaded portion (24), said threaded ring (25) lying in an annular groove and enclosing the tool holder, and its internal thread engaging into an external thread of the threaded portion (24), which protrudes through an opening in the sleeve (13) and is connected positively to the sleeve (13).

13. Device according to Claim 12, characterised in that the threaded portion passes through a longitudinally axial slot as an opening in the tool holder (11).

14. Device according to Claim 1, characterised in that the pin is constructed in the form of a journal pin (116) with a blind hole (140) for receiving a spindle or shaft.

15. Device according to Claim 1, characterised in that the angle of inclination (α) between the receiving hole (10) of the receiving sleeve (11b) and the longitudinal axis (21) of the device is between 2° and 10°.

## Revendications

1. Dispositif comportant, inséré dans un support (11, 130) et pouvant coulisser radialement, un tourillon (116) ou une broche (16a), en particulier une broche (16a) d'outil ou de porte-outil (16) dans un support d'outil (11), ou d'un tourillon de palier (116) dans une paroi (130), dispositif qui présente, par rapport à l'axe longitudinal (21, 121) du dispositif, un alésage de fixation dirigé obliquement (10, 110), dans lequel est montée une douille ajustée (13, 113), pouvant coulisser axialement, dont la surface enveloppante externe a, de même, une direction oblique, et dont la surface d'enveloppe interne, sous la forme d'un alésage de fixation (13b, 113b) pour la broche d'outil (16a) ou le tourillon de palier (116), est disposée parallèlement à l'axe longitudinal (21, 121) du dispositif, étant entendu que le réglage axial de la douille (13, 113) permet un réglage radial de la broche d'outil (16a) ou du tourillon (116), et donc de l'outil ou du porte-outil (16), et étant entendu que des organes de serrage (15, 24, 25; 124, 125), réalisés extérieurement sous la forme de fixation par pincement ou par vissage, sont prévus à l'intérieur du support, organes au moyen desquels la broche ou le tourillon (16a, 116), ou la douille (13, 113), peuvent être bloqués, la longueur de la douille (13, 113) étant plus petite que la profondeur de l'alésage de fixation (13b, 113b), d'une quantité correspondant au décalage axial souhaité,
caractérisé en ce que
le support (11, 130) présente, dans la zone de l'orifice de l'alésage de fixation (10, 110), en bout, une surface d'appui plane (12, 130a) qui s'étend, radialement, perpendiculairement à l'axe longitudinal (21, 121) du dispositif, en ce que la broche (16a) ou le tourillon de palier (116) présentent un talon périphérique (16b, 116b) sous la forme d'une bride annulaire ou d'une colerette annulaire, possédant une surface externe plane (16c, 116b) par laquelle le talon (16b, 116b) repose sur la surface d'appui plane (12, 130a) du porte-outil (11, 130) de telle façon que la douille (13, 113) puisse coulisser dans le support (11, 130) sans réglage axial de la broche (16a) ou du tourillon (116).

2. Dispositif suivant la revendication 1, caractérisé en ce que l'angle d'inclinaison (α) de l'alésage de fixation (10, 110) du support (11, 130) et de la surface enveloppante extérieure (13a, 113a) de la douille (13, 113) présente, par rapport à l'axe longitudinal (21, 121) du dispositif, une valeur allant jusqu'à 80°.

3. Dispositif suivant la revendication 2, caractérisé en ce que le support est un support d'outil (11) comportant une douille de fixation (11b), dans la paroi de laquelle est disposé au moins un alésage fileté (15a), dans la zone duquel la douille (13) présente un percement formé par un une fente longitudinale (14), au travers de laquelle passe une vis de serrage (15b, 15c), vissée dans l'alésage fileté (15a).

4. Dispositif suivant la revendication 3, caractérisé en ce que l'alésage fileté (15a) est incliné sur l'horizontale d'un angle faible et le tourillon (16a) possède un évidement (17) de forme conique, tel qu'une vis de serrage, vissée dans l'alésage fileté et dans l'évidement, tire le porte-outil (16) dans la douille de fixation (11b) et permet de presser le talon (16b) du porte-outil (16) sur la surface d'appui plane (12) de la douille de fixation (11b).

5. Dispositif suivant la revendication 1 ou la revendication 2, caractérisé en ce que la douille (113) présente en extrémité, dans la direction de l'axe longitudinal (121) du dispositif, un filetage extérieur (113c) qui fait prise dans un filetage intérieur (125a) d'un écrou de réglage (125) pouvant être fixé axialement par rapport à l'alésage de fixation (110).

6. Dispositif suivant la revendication 5, caractérisé en ce que l'écrou de réglage est réalisé sous la forme d'une cloche (125), qui est traversée, au centre, par une vis de serrage (124), dont la tige filetée fait prise, pour sa fixation, dans un alésage fileté (116c), centré, du tourillon de palier (116) de telle façon que la bride (116a) du tourillon de palier (116) soit en état d'être pressée sur la surface d'appui plane (130a) de la paroi (130).

7. Dispositif suivant l'une quelconque des revendications 1 à 6, caractérisé en ce qu'il est prévu, pour le réglage axial de la douille (13, 113) un organe de positionnement (18; 24, 25; 124, 125) pouvant être actionné de l'extérieur.

8. Dispositif suivant la revendication 7, caractérisé en ce que l'organe de positionnement (18) est disposé à l'intérieur du support d'outil (11).

9. Dispositif suivant la revendication 7, caractérisé en ce que l'organe de positionnement (18) est disposé à l'intérieur de la paroi de la douille de fixation (11b) du support d'outil (11).

10. Dispositif suivant l'une quelconque des revendications 1 à 9, caractérisé en ce que l'organe de positionnement (18) présente une roue hélicoïdale (18b), qui comporte, de préférence, une échelle de graduation et qui est en état d'actionner une tige (18c) qui fait prise dans un alésage borgne (19), à l'intérieur de la douille (13).

11. Dispositif suivant la revendication 10, caractérisé en ce que la roue hélicoïdale (18b) peut être actionnée par l'intermédiaire d'un alésage à six pans creux (18a).

12. Dispositif suivant la revendication 7, caractérisé en ce que l'organe de positionnement (18) est constitué par une bague filetée (25) et une pièce filetée (24), étant entendu que la bague filetée (25), placée dans une rainure annulaire, entoure le support d'outil et que son filetage intérieur fait prise dans le filetage extérieur de la pièce filetée (24) dépassant d'un percement de la douille (13), cette pièce filetée étant reliée, par conjugaison de formes, à la douille (13).

13. Dispositif suivant la revendication 12, caractérisé en ce que la pièce filetée traverse une fente longitudinale se présentant sous la forme d'un percement du support d'outil (11).

14. Dispositif suivant la revendication 1, caractérisé en ce que le tourillon est réalisé sous la forme d'un tourillon de palier (116) comportant un trou borgne (140) pour recevoir une broche ou un arbre.

15. Dispositif suivant la revendication 1, caractérisé en ce que l'angle d'inclinaison (α) de l'alésage de fixation (10) de la douille (11b) par rapport à l'axe longitudinal (21) est compris entre 2 et 10°.
